Europäisches Patentamt

European Patent Office

Office européen des brevets

(11) Numéro de publication: **0 208 595**
**A1**

## (12) DEMANDE DE BREVET EUROPEEN

(21) Numéro de dépôt: **86401383.4**

(22) Date de dépôt: **24.06.86**

(51) Int. Cl.⁴: **F 04 D 7/06**
**G 21 C 1/02**

(30) Priorité: **02.07.85 FR 8510089**

(43) Date de publication de la demande:
**14.01.87 Bulletin 87/3**

(84) Etats contractants désignés:
**DE GB IT**

(71) Demandeur: **NOVATOME**
**La Boursidière R.N. 186**
**F-92357 Le Plessis Robinson(FR)**

(72) Inventeur: **Thévenin, Michel**
**11, allée du Mail**
**F-94260 Fresnes(FR)**

(72) Inventeur: **Martin, Jean**
**5, rue Corot**
**F-92320 Châtillon(FR)**

(74) Mandataire: **Bressand, Georges et al,**
**c/o CABINET LAVOIX 2 Place d'Estienne d'Orves**
**F-75441 Paris Cedex 09(FR)**

(54) Citerne de transport pour métaux liquides réactifs.

(57) La citerne comporte un conduit (7) de vidange du métal liquide traversant l'ouverture (2) de l'enveloppe métallique (1) de façon que l'une de ses extrémités soit située au voisinage du fond de l'enveloppe (1), une vanne de fermeture (10) et un raccord (11) fixés sur le conduit (7), un inducteur (14) autour du conduit (7) au voisinage du fond associé à une alimentation électrique (18). On crée ainsi un champ glissant produisant un pompage électromagnétique de métal liquide dans le conduit (7).

FIG. 1

EP 0 208 595 A1

1

L'invention concerne une citerne de transport pour métaux liquides réactifs tels que les métaux alcalins.

On utilise dans l'industrie certains métaux alcalins tels que le sodium, le potassium, le calcium ou le lithium qui sont très oxydables et qui réagissent donc de façon très violente au contact d'un milieu oxydant tel que l'air. Ces métaux sont très souvent inflammables par simple contact avec l'air, même sans élévation de température. Ils sont généralement à très bas point de fusion, ces points de fusion étant pour la plupart compris entre 90° et 200°C, si bien qu'ils sont généralement utilisés et transportés sous forme liquide. Le transport entre l'usine de production et le lieu d'utilisation ou entre deux lieux d'utilisation successifs est assuré par des citernes de transport comportant une enveloppe en acier d'une capacité de l'ordre d'une dizaine de mètres cubes. Pour éviter le contact des métaux liquides avec l'air ambiant, pendant leur transport ou pendant leur utilisation, on maintient constamment au-dessus de ces métaux à l'état liquide, une atmosphère de gaz neutre. En particulier, pendant le remplissage et la vidange des citernes de transport, on doit assurer une protection constante du métal liquide par un gaz neutre.

Pour la vidange, du gaz neutre à l'état comprimé est injecté dans la citerne pour chasser le métal liquide dans un conduit relié à l'installation dont on effectue l'approvisionnement. L'enveloppe métallique de la citerne comporte une ouverture à sa partie supérieure dans laquelle on fixe de façon étanche l'ensemble du dispositif de vidange comportant le conduit d'injection de gaz sous pression et le conduit de vidange du métal liquide.

2

Ce procédé présente des inconvénients, en particulier, en ce qu'il ne permet pas de garantir un fonctionnement d'une parfaite sécurité. Des fausses manoeuvres peuvent entraîner des surpressions dans l'enveloppe de la citerne et des fuites de métal liquide accompagnées ou non d'une inflammation.

Même en prenant des précautions, les opérations de vidange d'une citerne de métal liquide réactif restent dangereuses pour le personnel d'exécution.

Des dispositifs particuliers permettent de réduire les risques mais ils sont extrêmement complexes et rendent difficile l'amorçage de la circulation du métal liquide dans le conduit de vidange. Enfin, il subsiste malgré tout des risques d'accident lorsque la vidange est effectuée par surpression gazeuse.

Le but de l'invention est donc de proposer une citerne de transport pour métaux liquides réactifs comportant une enveloppe métallique ayant une ouverture à sa partie supérieure, qui permette d'éviter les risques d'accident au moment de la vidange de la citerne, cette vidange ne nécessitant pas l'utilisation d'une surpression gazeuse.

Dans ce but, la citerne de transport suivant l'invention comporte en outre un conduit de vidange du métal liquide fixé sur l'enveloppe métallique et traversant l'ouverture de façon que l'une de ses extrémités soit située au voisinage du fond de l'enveloppe et son autre extrémité soit située à l'extérieur de l'enveloppe, une vanne de fermeture et un raccord fixés sur le conduit de vidange à son extrémité située à l'extérieur de l'enveloppe, un inducteur placé autour du conduit au voisinage du fond de l'enveloppe et associé à une alimentation électrique pour la création d'un champ glissant produisant un pompage électroma-

3

gnétique de métal liquide dans le conduit, des moyens associés à l'ouverture de l'enveloppe pour permettre le passage du conduit de vidange tout en maintenant l'isolation du volume interne de l'enveloppe renfermant le métal liquide de l'atmosphère extérieure et un dispositif d'introduction de gaz neutre dans l'enveloppe en remplacement du métal liquide prélevé.

Afin de bien faire comprendre l'invention, on va maintenant décrire, à titre d'exemples non limitatifs, deux modes de réalisation d'une citerne suivant l'invention.

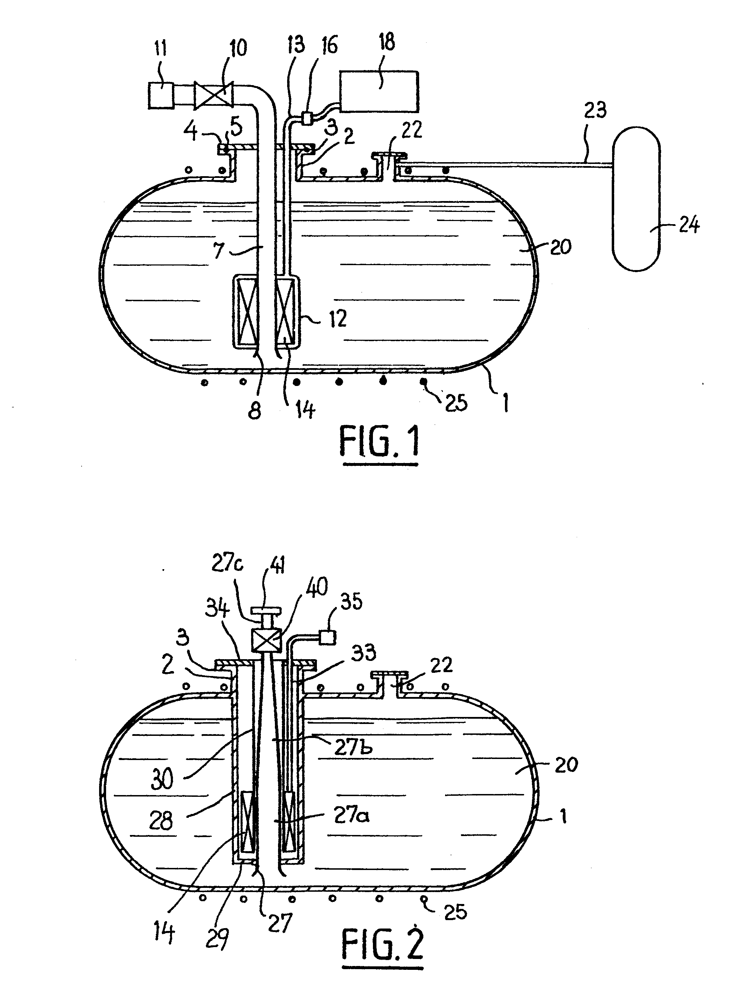

Dans ces figures, la figure 1 est une vue en coupe par un plan vertical d'un premier mode de réalisation d'une citerne suivant l'invention.

La figure 2 est une vue en coupe par un plan vertical d'un second mode de réalisation d'une citerne suivant l'invention.

Sur la figure 1, on voit une citerne de transport de sodium liquide comportant une enveloppe 1 en acier inoxydable de forme cylindrique à fond bombé disposée avec son axe horizontal et comportant une ouverture 2 à sa partie supérieure. Autour de l'ouverture 2, l'enveloppe métallique 1 constitue une bride d'appui 3 sur laquelle vient s'appliquer une plaque de fermeture 4 avec interposition d'un joint d'étanchéité 5, pour éviter toute entrée d'air dans l'enveloppe 1.

Un conduit de vidange 7 est fixé par soudage sur la plaque de fermeture 4 et comporte une partie verticale dont l'extrémité inférieure 8, légèrement évasée, débouche à l'intérieur de l'enveloppe 1 de la citerne, au voisinage du fond de cette citerne. Le conduit 7 qui traverse la plaque 4 comporte une partie verticale à l'intérieur de l'enveloppe, sur toute la hauteur de celle-ci, ainsi qu'un coude à angle droit

4

et une partie horizontale à l'extérieur de l'enveloppe 1. A l'extrémité de la partie horizontale du conduit 7, à l'extérieur de l'enveloppe 1, sont fixés une vanne 10 constituant un robinet d'arrêt sur le conduit 7 et un raccord 11 permettant de relier le conduit 7 à l'installation dont on assure l'approvisionnement en sodium liquide.

Autour du conduit 7, dans sa partie inférieure située au voisinage du fond de la citerne, une enveloppe 12 en acier inoxydable est fixée de façon étanche. Cette enveloppe 12 renferme un inducteur 14 constitué par une armature en matériau magnétique et des bobinages fixés sur cette armature. L'enveloppe 12 est prolongée par un conduit 13 dont la partie supérieure traverse de façon étanche la plaque de fermeture 4. Le conduit 13 renferme l'ensemble des fils d'alimentation électrique de l'inducteur 14 et comporte à son extrémité située à l'extérieur de l'enveloppe 1 un élément de raccordement électrique 16 permettant le branchement de l'inducteur et son alimentation par un dispositif d'alimentation électrique 18 situé à l'extérieur de l'enveloppe de la citerne. L'alimentation de l'inducteur 14 permet de créer un champ glissant du type moteur linéaire, à l'intérieur du conduit 7. Lorsque l'enveloppe 1 de la citerne renferme du sodium liquide 20, le champ glissant met ce sodium liquide en circulation à l'intérieur du conduit 7, dans la direction verticale et de bas en haut, en effectuant ainsi un pompage du métal liquide dans le conduit de vidange 7. L'inducteur 14 constitue le stator d'une pompe électromagnétique du type moteur linéaire, le métal liquide constituant la partie mobile du dispositif électromagnétique.

A la partie supérieure de l'enveloppe 1 est fixée une soupape 22 reliée par une tuyauterie 23 à une réserve de gaz neutre 24, permettant l'admission de gaz neutre à la pression atmosphérique dans l'enveloppe 1 de la citerne.

Un ensemble de résistances chauffantes 25 est disposé autour de l'enveloppe 1, en contact avec sa surface externe.

Après remplissage de la citerne, par exemple à l'usine de production de sodium liquide, le sodium 20 contenu dans la citerne se solidifie par refroidissement à travers la paroi de l'enveloppe métallique de la citerne. Le sodium est donc transporté à l'état solide jusqu'à son lieu d'utilisation, la citerne étant placée sur un moyen de transport tel qu'un camion. Pour réaliser la vidange de tout ou partie du sodium contenu dans la citerne, on réalise la fusion de ce sodium en alimentant les résistances chauffantes 25 en courant électrique. On relie le conduit de vidange 7 à l'installation utilisatrice, par l'intermédiaire du raccord 11 et l'on met l'inducteur 14 sous tension. Les pertes électriques dans l'inducteur 14 permettent un échauffement du sodium à l'intérieur du conduit 7, largement suffisant pour assurer sa liquéfaction. L'alimentation de l'inducteur 14 permet de réaliser un pompage du métal liquide qui parvient ainsi à l'installation utilisatrice. Simultanément, la soupape d'admission 22 permet d'introduire dans l'enveloppe 1 de la citerne, du gaz neutre provenant du réservoir 24.

On voit donc que la vidange de la citerne est réalisée sans utiliser de surpression gazeuse à l'intérieur de l'enveloppe 1, ce qui réduit considérablement les risques d'accident pendant les opérations de vidange. En effet, il suffit de couper l'alimentation électrique de la pompe pour que le débit s'arrête immédiatement, par exemple dès l'apparition d'une fuite sur le circuit de vidange, ce qui n'est pas le cas d'une vidange par surpression qui demande un très long temps (temps de dépressurisation).

La citerne telle que décrite comporte tous les éléments nécessaires pour réaliser les opérations de vidange, l'alimentation électrique 18 et le réservoir de gaz neutre 24 pouvant être fixés à demeure sur une partie de la citerne ou sur son camion transporteur.

Sur la figure 2, on voit un second mode de réalisation d'une citerne suivant l'invention, les éléments équivalents représentés aux figures 1 et 2 portant les mêmes repères. L'ouverture 2 ménagée dans la partie supérieure de l'enveloppe 1 est prolongée à l'intérieur de cette enveloppe par un tube 28 dont le diamètre est sensiblement égal au diamètre de l'ouverture 2 et dont la longueur est un peu inférieure à la hauteur de la citerne. Ce tube 28 est fermé à sa partie inférieure par une plaque annulaire 29 soudée suivant son bord intérieur à la partie inférieure du conduit de vidange 27. Sur la bride 3 de l'ouverture 2 repose une plaque 34 de forme annulaire. Suivant le bord intérieur de cette plaque annulaire 34 est fixé un tube 30 portant l'inducteur 14 à sa partie inférieure. L'inducteur 14 est alimenté en courant électrique par l'intermédiaire de fils 33 passant dans l'espace existant entre les tubes 28 et 30, traversant la plaque annulaire 34 et reliés à leur extrémité à un élément de raccordement électrique 35.

Le conduit de vidange 27 comporte une partie inférieure à grand diamètre 27a qui est reliée à la plaque de fermeture 29 du tube 28 et une partie supérieure tronconique 27b raccordée à une partie cylindrique d'extrémité 27c sur laquelle sont disposés une vanne de fermeture 40 et un raccord 41. Le diamètre extérieur maximum de la vanne 40 et du raccord 41 sont inférieurs au diamètre intérieur du tube 30 qui est égal au diamètre du contour intérieur de la plaque annulaire 34. Ce diamètre est également équivalent au diamètre intérieur de l'inducteur 14. Le diamètre extérieur de cet inducteur 14 est lui-même inférieur au diamètre de l'ouverture 2. On peut ainsi effectuer facilement le démontage et la mise en place de l'inducteur 14 relié au tube 30 et à la plaque annulaire 34, dans le cas de la citerne représentée à la figure 2. Le tube 28 et le conduit de vidange 27 restent en position sur la citerne et assurent la fermeture de l'ouverture 2 pour éviter toute introduction d'air dans la citerne.

Pendant le transport du métal liquide, la citerne n'est pas équipée d'un inducteur 14, un seul inducteur pouvant être utilisé au poste de vidange des citernes pour assurer le pompage du métal liquide dans chacune des citernes se présentant à ce poste de vidange. On réalise ainsi une économie substantielle sur le coût de construction d'une citerne, l'inducteur de la pompe électromagnétique intervenant pour une part importante dans le coût de cette citerne. Un seul inducteur au poste de vidange est alors nécessaire pour toute les citernes se présentant à ce poste.

De la même façon, le réservoir de gaz neutre 24 peut faire partie du poste de vidange, ce réservoir étant relié successivement à chacune des soupapes d'admission 22 des citernes se présentant au poste de vidange.

La citerne de transport selon l'invention

8

présente donc l'avantage d'être d'une grande sûreté d'utilisation, aucun gaz neutre sous pression n'étant nécessaire pour la vidange du métal liquide ; une bonne fiabilité et une grande régularité de fonctionnement sont obtenues grâce à un dispositif électromagnétique et enfin une grande simplicité de réalisation de la citerne permet d'en réduire le coût.

La citerne de transport peut être réalisée de façon à comporter l'ensemble des moyens nécessaires pour la vidange du métal liquide et dans ce cas son autonomie est complète ou, de façon alternative, cette citerne peut nécessiter l'utilisation de moyens de pompage et/ou d'alimentation en gaz neutre indépendants et communs au parc de citernes de transport utilisées, dans un but d'économie.

Dans tous les cas, l'inducteur de la pompe électromagnétique est parfaitement protégé et fonctionne à une température modérée, qui dans le cas du sodium liquide ne dépasse pas 200°.

En particulier, dans le cas du mode de réalisation représenté à la figure 2, l'inducteur est introduit dans un puits séparé du métal liquide par des parois métalliques. La plaque de support de cet inducteur vient simplement reposer sur la bride entourant l'ouverture de la citerne. Dans le cas du mode de réalisation représenté à la figure 1, l'inducteur est protégé par une enveloppe immergée dans le métal. Dans les deux cas, on peut prévoir une isolation thermique supplémentaire et un refroidissement de l'inducteur pour le faire fonctionner à température modérée.

Dans le cas des deux modes de réalisation, le dispositif de pompage peut être facilement démonté et remis en place dans la citerne.

La citerne de transport suivant l'invention

9

est donc d'une grande sûreté de fonctionnement et d'utilisation, l'entretien et la réparation du dispositif de pompage sont particulièrement aisés et sa construction est simple et peu coûteuse.

L'invention ne se limite pas aux modes de réalisations qui ont été décrits ; elle en comporte au contraire toutes les variantes. On peut prévoir en particulier un montage et un support de l'ensemble de pompage et du conduit de vidange différents de ceux qui ont été décrits.

Enfin, la citerne de transport suivant l'invention s'applique non seulement au transport du sodium, par exemple utilisé comme fluide de refroidissement dans les réacteurs nucléaires à neutrons rapides, mais encore au transport de potassium, d'alliages de sodium et de potassium, de calcium ou de lithium. Cette citerne peut également être utilisée pour le transport de métaux réactifs différents des métaux alcalins.

10

REVENDICATIONS

1.- Citerne de transport pour métaux liquides réactifs comportant une enveloppe métallique (1) ayant une ouverture (2) à sa partie supérieure caractérisée par le fait qu'elle comporte en outre un conduit (7) de vidange du métal liquide fixé sur l'enveloppe métallique (1) et traversant l'ouverture (2) de façon que l'une de ses extrémités (8) soit située au voisinage du fond de l'enveloppe et que son autre extrémité soit située à l'extérieur de l'enveloppe, une vanne de fermeture (10) et un raccord (11) fixés sur le conduit de vidange (7) à son extrémité située à l'extérieur de l'enveloppe (1), un inducteur (14) placé autour du conduit (7) au voisinage du fond de l'enveloppe (1) et associé à une alimentation électrique (18) pour la création d'un champ glissant produisant un pompage électromagnétique de métal liquide dans le conduit (7), des moyens (4, 5, 34) associés à l'ouverture (2) de l'enveloppe pour permettre le passage du conduit (7) de vidange tout en maintenant l'isolation du volume interne de l'enveloppe renfermant le métal liquide de l'atmosphère extérieure et un dispositif (22, 23, 24) d'introduction de gaz neutre dans l'enveloppe en remplacement du métal liquide prélevé.

2.- Citerne de transport selon la revendication 1, caractérisée par le fait que les moyens (4, 5) associés à l'ouverture (2) de l'enveloppe sont constitués par une plaque (4) reposant sur une bride d'appui (3) entourant l'ouverture (2) avec interposition d'un joint (5), sur laquelle est fixé de façon étanche, au voisinage de sa partie centrale, le conduit (7) qui porte l'inducteur (14) placé à l'intérieur d'une enveloppe de protection (12).

0208595

11

3.- Citerne de transport suivant la revendication 1, caractérisée par le fait que les moyens associés à l'ouverture (2) de l'enveloppe sont constitués par un tube vertical (28) solidaire de l'enveloppe (1) au niveau de son ouverture (2) et prolongeant celle-ci à l'intérieur de l'enveloppe (1) de la citerne, fermé à sa partie inférieure par un fond annulaire (29) suivant l'ouverture intérieure duquel est fixé le conduit de vidange (27), une plaque (34) de forme annulaire reposant sur une bride (3) entourant l'ouverture (2) suivant le contour intérieur de laquelle est fixé un tube vertical (30) portant l'inducteur (14) à sa partie inférieure, le tube (30) et l'inducteur (14) étant disposés dans l'espace annulaire ménagé entre le tube (28) et le conduit de vidange (27) qui comporte une partie inférieure (27a) à grand diamètre, une partie intermédiaire (27b) de forme tronconique et une partie supérieure à faible diamètre portant la vanne (40) et le raccord (41) de façon que cette vanne et ce raccord aient un diamètre extérieur maximal inférieur au diamètre du tube (30) et au diamètre intérieur de l'inducteur (14), l'ensemble comportant la plaque annulaire (34), le tube (30) et l'inducteur (14) étant ainsi facilement démonté et mis en place sur la citerne.

4.- Citerne de transport suivant l'une quelconque des revendications 1, 2 et 3, caractérisée par le fait que l'inducteur (14) de pompage électromagnétique est commun à tout un parc de citernes de transport.

5.- Citerne de transport suivant l'une quelconque des revendications 1, 2, 3 et 4, caractérisé par le fait qu'elle comporte une réserve de gaz neutre (24) destinée à alimenter le dispositif (22) d'introduction de gaz neutre dans l'enveloppe (1).

12

6.- Application d'une citerne de transport suivant l'une quelconque des revendications 1, 2, 3, 4 et 5 au transport ou au stockage d'un métal liquide de type alcalin faisant partie du groupe : sodium, potassium, alliages de sodium et de potassium, calcium et lithium.

FIG.1

FIG.2

Office européen
des brevets

**RAPPORT DE RECHERCHE EUROPEENNE**

EP 86 40 1383

## DOCUMENTS CONSIDERES COMME PERTINENTS

| Catégorie | Citation du document avec indication, en cas de besoin des parties pertinentes | Revendication concernee | CLASSEMENT DE LA DEMANDE (Int Cl 4) |
|---|---|---|---|
| A | NUCLEAR ENGINEERING, vol. 24, no. 280, janvier 1979, pages 45-50, Hanford, US; R.J. BLISS et al.: "Fast flux test facility ready to run" <br> * Page 49, colonne du milieu, colonne de droite; figure 8 * | 1,5,6 | F 04 D 7/06 <br> G 21 C 1/02 |
| | --- | | |
| A | US-A-3 635 286 (F. DUBSEK) <br><br> * Abrégé; colonne 2, lignes 14-23,40-47 * | 1,2,5, 6 | |
| | --- | | |
| A | FR-A-2 478 276 (CEA) <br> * Revendication 1; figure unique * | 1 | |
| | --- | | |
| A | FR-A-2 515 747 (RUTSCHI AG) <br> * Page 1, lignes 6-14; page 3, lignes 9-21; page 4, ligne 28 - page 5, ligne 15; figure unique * | 1-5 | |
| | ----- | | |

| DOMAINES TECHNIQUES RECHERCHES (Int Cl 4) |
|---|
| G 21 C 1/00 |
| G 21 C 15/00 |
| G 21 D 1/00 |
| G 21 F 5/00 |
| B 67 D 5/00 |
| B 65 D 90/00 |
| F 04 D 7/00 |
| F 42 B 37/00 |

Le présent rapport de recherche a été établi pour toutes les revendications

| Lieu de la recherche <br> **LA HAYE** | Date d achevement de la recherche <br> **09-10-1986** | Examinateur <br> **JANDL F.** |
|---|---|---|

OEB FORM 1503 03 82